# EUROPEAN PATENT APPLICATION

(11) **EP 2 065 435 A1**
(43) Date of publication of application: **03.06.2009**
(21) Application number: 08405294.3
(22) Date of filing: 28.11.2008
(51) Int. Cl.: C08K 5/42, C08L 67/04

(54) **Biodegradable polyester compositions**

(30) Priority: 29.11.2007 EP 07405339
(71) Applicant: Sukano Management+Services AG, 8834 Schindellegi (CH)
(72) Inventor: Guillaume, Douard, 8134 Adliswil (CH)
(74) Representative: Carreira-Staubli, Andrea

(57) **Abstract**

The present invention relates to a biodegradable polyester composition having excellent transparency and impact strength, in particular to a biodegradable polyester composition comprising polylactic acid and a metal alkyl sulfonate as impact modifier as well as to a masterbatch composition useful in the preparation of the biodegradable polyester composition, and to films, sheets, profiles or moulded articles made thereof.

## Description

### Field of the invention

The present invention relates to a biodegradable polyester composition having excellent transparency and impact strength, in particular to a biodegradable polyester composition comprising polylactic acid and a metal alkyl sulfonate as impact modifier as well as to a masterbatch composition useful in the preparation of the biodegradable polyester composition, and to films, sheets, profiles or moulded articles made thereof.

### Background of the invention

Synthetic petroleum-based plastics, such as polyethylene, polypropylene, polystyrene, polyvinyl chloride, polyethylene terephtalate, and polybutylene terephtalate have found a quantity of applications in various domains such as packaging, construction, or electronic materials, rendering them indispensable.

However the more and more limited availability of fossil resources like petroleum, the induced raw material price increase, and the increasing awareness of people about the necessity to preserve the environment and reduce carbon dioxide emissions, render more and more important the need to find commercially and ecologically viable alternatives to existing oil-based plastics.

For a long time, bio-plastics, which include biodegradable materials and materials based on renewable resources, have suffered from high costs, limited availability and poor end use properties when compared to standard petroleum-based polymers. Hence, in spite of their better environmental impact, their use as alternative to standard plastics has typically been rather limited.

Only recently, a few have proven themselves to be suitable alternatives to oil-based polymers, including polylactic acid (referred to as PLA in the following), which is a natural alternative for standard plastics such as polyethylene terephtalate due to its excellent mechanical properties and above all transparency and gloss.

However, PLA suffers from one major drawback, which is its lack of impact strength and poor cutting resistance compared to other polymers and especially PET. This is particularly problematic for sheets where cracks will appear upon cutting or for thermoformed articles, which need to be stamped into the desired shape through a die cutting process. This may lead to breakage of thermoformed PLA trays upon conveying or of PLA bottles when exposed to mechanical stress such as shock or even to broken off pieces being locked up in produced articles, such as food-packaging trays.

Thus, PLA has not yet been widely accepted and conventional materials are often still preferred.

It is known that the addition of core-shell impact modifiers, for instance composed of elastomer core and acrylic shell, can significantly improve the impact strength of brittle materials. However they are typically accompanied by a strong decrease of the transparency and/or need a high loading (such as between 5 and 10%). Furthermore such core-shell additives are typically expensive rendering them economically unsuitable. Moreover, since such core-shells impact modifiers are typically not biodegradable themselves, their use in biodegradable polymers for the manufacture of compostable articles seems futile. With a minimal loading in the end product of 5%, they would prevent certification of the end product as being compostable by not meeting the stringent requirements in accordance with the norm DIN EN 13432 ("Packaging - Requirements for packaging recoverable through composting and biodegradation - Test scheme and evaluation criteria for the final acceptance of packaging"), which only tolerates up to 1% of non biodegradable additives in compostable articles.

There are other biodegradable polymers, such as aliphatic-aromatic copolyesters, starch or cellulose based polymers or non-biodegradable oil-based polymers like acrylic copolymers or ethylene copolymers, which may be effective in improving the flexibility and brittleness of PLA. However, these may typically cause an alteration of PLA transparency rendering them very hazy and almost opaque.

Polycaprolactone, which acts as a plasticizer for PLA by improving the flexibility and brittleness of PLA, induces a lowering of the glass transition temperature of PLA increasing its softness and potentially leading to deformation of the article.

Other known biodegradable polyester compositions include for example combinations of PLA as biodegradable polyester resin, glycerine monostearate and sodium alkyl sulfonate (EP 1 388 562 B1), which are known for their good anti-static properties. Yet, glycerine fatty acid derivatives such as glycerine monostearate act as a plasticizer for the majority of polyesters and thus reduce the glass transition temperature of the base polymer and therefore the heat deflection temperature of the articles produced thereof, limiting their final use. In addition, glycerine fatty acid derivatives may also be acting as an internal lubricant, causing a decrease of the melt viscosity of the carrier, and thus potentially leading to difficulties in processability, such as in sheet production or in extrusion blow moulding process, where a high melt strength is required. Further their addition may also enhance the migration of additives out of the polymer matrix, which is highly detrimental for food contact approvals and organoleptics properties of the end use article when intended for food packaging applications. Additive migration to the surface of the final article may in addition decrease the surface energy of the polymer and eventually deteriorate the printability of end use articles. Comparative examples without glycerine monostearate only showed very low antistatic properties and moderate transparency.

Alkyl sulfonate has been known to be added as a dispersing agent to polymers, such as in a mixture with a biodegradable resin and a feller based on starch (EP 1 097 967) or in polyester-grafted starch derivatives (EP 0 814 092). However, the presence of a starch in significantly high amounts abolishes or reduces transparency, which limits their use.

Alkyl sulfonate has been known to be added as antistatic agent to other polymers, causing polymer degradation, characterized by bubbles and discolouration, especially in polymers with very high processing temperature. This degradation and processing problems have been overcome with the addition of organophosphorous stabilizers or organic chelating agents (US 5,045,580). Alkyl sulfonates have also been disclosed as possible antistatic agents in laminated polyesters (US 6,110,578), biodegradable polyester resins, such as polybutylene succinate (EP 1 605 017) or a standard polyester resin, such as polybutylene terephtalate (EP 0 357 896). However due to their inherent very fast crystallising nature, polybutylene terephtalate and polybutylene succinate are opaque and thus unsuitable for applications where transparency is required, such as packaging applications.

In view of the above, there is clearly still a great need for a biodegradable polyester composition having high impact strength while maintaining other key properties like transparency, biodegradability, processability and heat resistance.

Applicants have now found that biodegradable polyester compositions comprising a biodegradable polyester resin and an alkyl sulfonate as impact modifier are able to overcome the drawbacks of the prior art by showing high impact strength, while maintaining excellent transparency, as well as heat resistance, printability, biodegradability, compostability, as well as processability.

### Summary of the invention

In a first aspect, the invention provides a biodegradable polyester composition comprising a biodegradable polyester resin and an alkyl sulfonate, with the proviso that glycerin fatty acid esters are excluded from the composition. The compositions of the invention are characterized by high impact strength, while maintaining excellent transparency, as well as heat resistance, printability, biodegradability, compostability, as well as processability.

In one specific embodiment the biodegradable polyester resin is (i) a biodegradable polyester selected from biodegradable aliphatic polyesters, aliphatic-aromatic polyesters, or polyhydroxyalkanoates, (ii) a blend of at least two biodegradable polyester selected from biodegradable aliphatic polyesters, aliphatic-aromatic polyesters, or polyhydroxyalkanoates, or (iii) a blend of a biodegradable polyester selected from biodegradable aliphatic polyesters, aliphatic-aromatic polyesters or polyhydroxyalkanoate with a further biodegradable polymer other than a polyester.

In another specific embodiment the biodegradable polyester resin comprises polylactic acid singly or in form of a blend in combination with one or more further biodegradable polyesters or in form of a blend in combination with one or more biodegradable polymers other than polyesters.

In yet another embodiment the alkyl sulfonate is a metal C(6-24) sulfonate or a mixture thereof, i.e. a mixture of alkyl sulfonates having a different alkyl chain length.

Preferably the alkyl sulfonate is present in an amount of between 0.1 and 5% and the biodegradable polyester resin in amount of between 95 and 99.9% by weight based on the total composition weight.

In yet another specific embodiment the invention provides a biodegradable polyester composition essentially consisting of a biodegradable polyester resin and an alkyl sulfonate.

In a further embodiment the biodegradable polyester composition of the present invention may additionally comprise additional polymers, dyestuffs, pigments, optical brighteners, fillers, antimicrobial additives, antistatic additives, antioxidants, flame-retardants, foaming agents, infrared absorbers, light diffusers, matting agents, melt viscosity enhancers, branching agents, nucleating agents, plasticizers, mould release additives, slip agents, lubricants, antiblock, processing aids, UV-stabilizers, and mixtures thereof, in a manner so as not to affect the impact strength improvement claimed in the present invention.

In a further aspect the invention provides a polyester masterbatch composition comprising a biodegradable polyester resin and an alkyl sulfonate with the proviso that glycerin fatty acid esters are excluded from the composition.

In one specific embodiment the biodegradable polyester resin of the masterbatch composition is (i) a biodegradable polyester selected from biodegradable aliphatic polyesters, aliphatic-aromatic polyesters, or polyhydroxyalkanoates, (ii) a blend of at least two biodegradable polyester selected from biodegradable aliphatic polyesters, aliphatic-aromatic polyesters, or polyhydroxyalkanoates, or (iii) a blend of a biodegradable polyester selected from biodegradable aliphatic polyesters, aliphatic-aromatic polyesters or polyhydroxyalkanoate with a further biodegradable polymer other than a polyester.

In another specific embodiment the biodegradable polyester resin of the masterbatch composition comprises polylactic acid singly or in form of a blend in combination with one or more further biodegradable polyesters or in form of a blend in combination with one or more biodegradable polymers other than polyesters.

In yet another embodiment the alkyl sulfonate is a metal C(6-24) sulfonate or a mixture thereof, i.e. a mixture of alkyl sulfonates having a different alkyl chain length.

In a further embodiment the polyester masterbatch composition of the present invention may additionally comprise additional polymers, dyestuffs, pigments, optical brighteners, fillers, antimicrobial additives, antistatic additives, antioxidants, flame-retardants, foaming agents, infrared absorbers, light diffusers, matting agents, melt viscosity enhancers, branching agents, nucleating agents plasticizers, mould release additives, slip agents, lubricants, antiblock, processing aids, UV-stabilizers, and mixtures thereof, in a manner so as not to affect the impact strength improvement claimed in the present invention.

In a preferred embodiment the invention provides a polyester masterbatch composition comprising polylactic acid and a sodium alkyl C(6-24) sulfonate where the ratio polylactic acid to alkyl sulfonate is comprised between 1/1 and 1/20 by weight related to the total composition weight.

In a further aspect the invention is directed towards the use of a polyester masterbatch composition of the invention for the production of a biodegradable polyester composition of the invention.

In a further aspect the invention provides a method for producing biodegradable polyester compositions comprising the step of mixing the polyester masterbatch composition of the present invention with a biodegradable polyester resin.

In a further aspect the invention is directed towards the use of the compositions of the invention in the production of a film, sheet, multiplayer coextruded film or sheet, profile, coating, thermoformed article and moulded article.

In a further aspect the present invention provides a film, sheet, profile, or moulded article composed of a biodegradable polyester composition according to the invention.

In a further aspect the present invention provides a method for producing a film, sheet, profile, or moulded article comprising the step of mixing the polyester masterbatch of the present invention with a biodegradable polyester resin.

In yet a further aspect the invention is directed towards the use of an alkyl sulfonate as an impact modifier in biodegradable polyester resins.

These aspects as well as other aspects will become more apparent from the following detailed description.

### Detailed description of the invention

In a first aspect, the invention provides a biodegradable polyester composition comprising a biodegradable polyester resin and an alkyl sulfonate, with the proviso that glycerin fatty acid esters are excluded from the composition. The compositions of the invention are characterized by high impact strength, while maintaining excellent transparency, as well as heat resistance, printability, biodegradability, compostability, as well as processability.

As used herein, excellent transparency means a transparency which is greater than 75 %, preferably greater than 80%, more preferably greater than 85% and/or a haze which is lower than 25 %, preferably lower than 20% more preferably lower than 15 %. In a most preferred embodiment excellent transparency means a transparency which is greater than 90 % and/or a haze which is lower than 10 %. Thus in a preferred embodiment the invention is directed towards a biodegradable polyester composition with excellent impact strength comprising a biodegradable polyester resin and a metal alkyl sulfonate, wherein the biodegradable polyester composition shows a transparency > 75 % and/or a haze < 25 %, with the proviso that glycerin fatty acid esters are excluded from the composition.

The term light transmission is the percentage of incident light that passes through a film. The term haze as used herein is the percentage of transmitted light which in passing through a polymer specimen herein deviates more than 2.5° from the incident beam by forward scattering.

It is understood that all plastic and glass materials may have some degree of light scattering which in terms of transmission loss may or may not be measured as haze. It is further understood that since both absorption and haze essentially increase linearly with an increase in thickness, they must be measured in relation to the thickness of a sample

As used herein, the biodegradable polyester resin comprises one or more of known biodegradable polyesters, such as aliphatic polyesters, aliphatic-aromatic polyesters, , polyhydroxyalkanoates, and the like, including blends and copolymers thereof.

Preferably, the total amount of biodegradable polyester resin (i.e. polymer, copolymer, or polymer blend) present in the composition is between 95% to 99.9 %, preferably 98% to 99.9 % by weight based on the total biodegradable polyester composition.. Specific examples of biodegradable aliphatic polyesters include but are not limited to poly(glycolic acid), poly(ε-caprolactone), poly(β-propiolactone), poly(ethylene succinate), poly(butylene succinate), poly(butylene succinate-co-adipate), poly(hexamethylene succinate), poly(ethylene adipate), poly(butylene adipate), poly(hexamethylene adipate), poly(ethylene oxalate), poly(butylene oxalate), poly(neopentyl oxalate), poly(ethylene sebacate), poly(butylene sebacate), poly(hexamethylene sebacate).

The term aliphatic aromatic polyesters as used herein denotes polymers obtained from the polycondensation reaction of one or more glycol, together with one or more aromatic dicarboxylic acid and one or more aliphatic dicarboxylic acid, Specific examples of glycols include ethylene glycol, propylene glycol, 1,3-propanediol, 1,4-butanediol, neopentyl glycol, 1,6-hexanediol, decamethylene glycol and polymeric glycols such as polyoxyethylene glycol, polyoxypropylene glycol, polyoxytetramethylene glycol or their copolymers. Specific examples of aromatic dicarboxylic acid include terephtalic acid and isophtalic acid. Specific examples of aliphatic dicarboxylic acid include succinic acid, adipic acid, suberic acid, azelaic acid, sebacic acid, 1,10-decanedicarboxylic acid, 1,12-dodecanedicarboxylic acid, 1, 16-hexadecanedicarboxylic acid 1,18-octadecanedicarboxylic and fumaric acid.

Specific examples of biodegradable aliphatic-aromatic polyester include poly(ethylene adipate-co-terephtalate), poly(butylene adipate-co-terephtalate), poly(propylene adipate-co-terephtalate), poly(ethylene succinate-co-terephtalate), poly(butylene succinate-co-terephtalate), poly(ethylene sebacate-co-terephtalate), and poly(butylene sebacate-co-terephtalate).

Specific examples of polyhydroxyalkanoates include poly(3-hydroxybutyrate), poly(3-hydroxyvalerate), poly(3-hydroxybutyrate-co-3-hydroxyvalerate), poly(3-hydroxybutyrate-co-4-hydroxyvalerate), poly(3-hydroxybutyrate-co-3-hydroxycaproate), poly(3-hydroxybutyrate-co-3-hydroxydecanoate), poly(3-hydroxycaproate), poly(3-hydroxyheptanoate), poly(3-hydroxyoctanoate) and poly(3-hydroxydecanoate).

Preferably, the biodegradable polyester resin comprises PLA including blends and copolymers thereof.

PLA is known to exist in several distinct forms due to the chiral nature of its monomer unit lactic acid. PLA as used herein includes the homopolymer poly(L-lactic acid) wherein the structural unit of lactic acid is L-lactic acid, the homopolymer poly(D-lactic acid) wherein the structural unit of lactic acid is D-lactic acid, poly(DL-lactic acid) wherein the structural unit of lactic acid is a mixture of L-lactic acid and D-lactic acid in varying ratios.

PLA may be obtained by any method known in the art. Typically used methods include ring-opening polymerisation of lactide monomers, direct polycondensation of lactic acid and dehydration condensation of lactic acid.

In the ring-opening polymerization method, a lactide which is a cyclic dimer of lactic acid is used typically in the presence of catalysts such as stannous octoate, if necessary, in the presence of a polymerization modifier to obtain PLA. As the lactide includes L-lactide which is a dimer of L-lactic acid, D-lactide which is a dimer of D-lactic acid and DL-lactide consisting of L-lactic acid and D-lactic acid, these isomers are optionally mixed and polymerized to obtain PLA having a desired composition and cristallinity.

If desired, a chain-extending agent such as a diisocyanate compound, an epoxy compound or an acid anhydride can be used for the purpose of increasing molecular weight of the PLA. A weight average molecular weight of the PLA is generally within the range of 60,000-1,000,000.

In the polycondensation method, for example, L-lactic acid, D-lactic acid or a mixture of these is subjected directly to polydehydrocondensation reaction whereby polylactic acid having a desired composition can be obtained.

In the dehydration condensation (also known as azeotropic polycondensation) of lactic acid, the polymerisation occurs again through a direct condensation of a purified L-lactic acid whereby the water produced from the condensation reaction is distilled off.

In a further embodiment, the present invention provides a biodegradable polyester composition comprising a blend of at least two biodegradable polyester resins and a metal alkyl sulfonate. In particular the present invention provides a biodegradable polyester composition comprising PLA, a metal alkyl sulfonate and a further biodegradable polyester resin.

Preferred blends include blends of PLA with one or more further aliphatic or aliphatic aromatic biodegradable polyesters selected from but not limited to poly(glycolic acid), polycaprolactone, poly(butylene succinate), poly(butylene succinate-co-adipate), poly(butylene adipate-co-terephtalate), poly(butylene succinate-co-terephtalate), poly(3-hydroxybutyrate), poly(3-hydroxyvalerate), poly(3-hydroxybutyrate-co-3-hydroxyvalerate) and/or poly(3-hydroxybutyrate-co-4-hydroxyvalerate).

In yet a further embodiment the present invention provides a biodegradable polyester composition comprising a blend of a biodegradable polyester resin with a further biodegradable polymer that is not of the polyester type, and a metal alkyl sulfonate. In particular the present invention provides a biodegradable polyester composition comprising a blend of PLA with a further biodegradable polymer that is not of the polyester type, and a metal alkyl sulfonate.

Preferred blends include blends of PLA with one or more biodegradable polymers other than polyesters selected from but not limited to olefin oligomers, natural rubber, lignin, polysaccharides such as starch or cellulose, proteins such as gelatine, casein, silk or wood, polyester amides, polyvinylesters, polyvinyl alcohol, polyanhydrides, polyamides, polyureas, poly(amines-enamines), polyurethanes and polyphosphazenes.

Preferably, blends of PLA with at least one further biodegradable polyester and/or at least one further biodegradable polymer other than polyester comprise PLA in an amount of from 50% to 100 %, more preferably from 75% to 100 %, most preferably from 90% to 100% by weight based on the total composition.

In yet a further embodiment, the biodegradable polyester resin according to the present invention also includes biodegradable polyester copolymers comprising at least two different monomers.

Thus, in one specific embodiment the present invention provides a biodegradable polyester composition comprising a biodegradable co-polyester resin and a metal alkyl sulfonate. In particular the present invention provides a biodegradable polyester composition comprising a copolymer of lactic acid and at least one further copolymerizable monomer other than lactic acid and a metal alkyl sulfonate.

Preferably, the polyester resin is a copolymer of lactic acid wherein lactic acid is a predominant component and at least one copolymerizable monomer other than lactic acid is in a smaller proportion, for example, a copolymer of lactic acid with less than 50% by weight, preferably not more than 30% by weight, and more preferably not more than 10% by weight of a monomer other than lactic acid.

Preferred copolymers include but are not limited to copolymers of lactic acid with glycolic acid, caprolactone, 3-hydroxybutyric acid and 3-hydroxyvaleric acid.

The term "alkyl sulfonate" as used herein may be any metal alkyl sulfonate. In a preferred embodiment the metal in the metal alkyl sulfonate includes alkali metals, such as sodium and potassium and earth metals such as calcium, barium and magnesium.

The term "alkyl" as used herein represents linear or branched (C₆₋₂₄) alkyl, more preferably (C₈₋₂₀) alkyl, most preferably (C₁₀₋₁₈) alkyl.

Mixtures of alkyl sulfonates represent combinations of two or more alkyl sulfonates having alkyl groups of different chain length.

Preferred examples of metal alkyl sulfonates include sodium n-hexyl sulfonate, sodium n-heptyl sulfonate, sodium n-octyl sulfonate, sodium n-nonyl sulfonate, sodium n-decyl sulfonate, sodium n-undecyl sulfonate, sodium n-dodecyl sulfonate, sodium n-tridecyl sulfonate, sodium n-tetradecyl sulfonate, sodium n-pentadecyl sulfonate, sodium n-hexadecyl sulfonate, sodium n-heptadecyl sulfonate, sodium n-octadecyl sulfonate and mixtures thereof.

In preferred embodiments, the present invention relates to a sodium alkyl (C₆₋₂₄) sulfonate, more preferably sodium sulfonate alkyl (C₈₋₂₀), sodium sulfonate alkyl (C₁₀₋₁₈).

Preferably, the metal alkyl sulfonate is present the biodegradable polyester composition in an amount between 0.1 and 5%, more preferably 0.5 and 2%, most preferably 1 and 1.25% by weight based on the total composition weight. Preferred ratio of metal alkyl sulfonate to polyester resin is between 1/1000 and 1/20 by weight, more preferred from 1/200 to 1/50, most preferred 1/100 and 1/80.

In a further preferred embodiment the invention provides a biodegradable polyester composition essentially consisting of a biodegradable polyester resin and an alkyl sulfonate.

In a specific embodiment, the invention provides a biodegradable polyester composition showing high impact strength and excellent transparency wherein the biodegradable polyester resin is PLA optionally in combination with a further biodegradable polymer and an alkyl sulfonate, with the proviso that glycerin fatty acid esters are excluded from the composition.

The compositions according to the present invention show excellent impact strength due to the addition of an alkyl sulfonate as impact modifier. For example, it is known that in the absence of an alkyl sulfonate, PLA is very brittle and impact strength very low (see comparative example CE1, Table 1). It has been observed that the impact strength of PLEA can be improved dramatically with a loading of an alkyl sulfonate as low as 1%, showing a 10fold increase of the total energy needed to penetrate the sample compared to pure PLA (see Examples E1 and CE1, Table 2). By increasing the sodium alkyl sulfonate further, such as to a loading of 2%, the impact strength of the PLA composition can be improved further (see Example E2, Table 2).

Further impact resistance tests (dart drop test) were performed on films having a thickness of 1 mm to determine the failure mode of the specimens. The failure mode was defined as brittle if the specimen completely shattered, the brittle-ductile (BD) failure mode was defined by some yielding, but many propagating radial cracks in specimen, the ductile-brittle (DB) failure mode was defined by some radial cracking, which however mostly arrested prior to penetration, and in the ductile failure mode no radial cracks were observed. The desirable failure mode is completely ductile at the conditions specified. It was observed that pure PLA films typically underwent brittle failures, while PLA films comprising 1% alkyl sulfonate have mainly undergone ductile or mixed ductile-brittle failure and PLA films containing 2% alkyl sulfonate always showed failure in the ductile mode.

As indicated hereinabove the compositions of the invention show excellent impact strength but are able to maintain at the same time excellent transparency. Light transmission experiments performed in accordance with ASTM D1003 indicated that a composition comprising PLA and an alkyl sulfonate in an amount of up to 2 % was only accompanied with a minimal decrease of the haze compared to 100% PLA (see Examples E1, E2 and CE1, Table 1). Comparative experiments, which were performed using compositions comprising PLA and other commercial, state-of-the-art impact modifiers for PLA (based on aliphatic-aromatic polyesters) in a concentration as recommended to get a desired impact strength improvement of PLA, indicated almost complete opaqueness of the samples (see Examples CE2, CE3, Table 2). The compositions of the present invention showed excellent transparency in films with a thickness of 0.5 mm produced on a film extruder (See Examples E1, E2 and CE1, Table 1), in injection moulded parts with a thickness of 2 mm produced on an injection moulding press (See Examples E5, E6, E7 and CE6, Table 4), and in blown films with a thickness of 100 µm produced on a blown film extruder (See Examples E8, E9 and CE7, Table 5).

Furthermore, the biodegradable compositions of the invention exceptional good curability, in addition to excellent impact strength and transparency. Thus, films or sheets made form biodegradable compositions of the invention did not exhibit the small cracks during cutting usually observed for 100% PLA.

Thus, the improved impact properties of the sheets allowed a faster cutting of the trays with less risks of splitting and a faster conveying with less risks of breakage, which is in particular appreciable for thermoforming processes, i.e. during the manufacture of e.g. thermoformed food-trays based on biodegradable sheets, resulting in an increase of productivity in the manufacture of such end-products.

It was further observed that, as opposed to commonly used plasticizers, such as glycerol monostearate or polycaprolactone, which are able to increase the flexibility of PLA, and thus improve the impact strength, but typically induce a strong decrease of the glass transition of PLA, the impact strength and cuttability improvement of the biodegradable polyester compositions and in particular the biodegradable PLA compositions of the invention, was obtained without decrease of the glass transition temperature. This improvement will make them highly suitable for applications which require adequate heat resistance, for example to avoid deformation at higher temperatures.

The biodegradable polyester compositions and in particular the biodegradable PLA compositions of the invention are further characterized by an unchanged, excellent processability of the specimens. Film extrusion experiments performed on a big scale film extruder have shown that the addition of alkyl sulfonate as the impact modifier additive necessitated no modification of the process parameters or any need for process optimisation. In comparison, commonly used plasticizers, such as glycerol monostearate or polycaprolactone, or other impact modifier additives for PLA, are known to decrease the melt viscosity of PLA, which is particularly detrimental for film and sheet extrusion causing sagging or for extrusion blow moulding processing where high melt strength is required.

Determination of the melt flow index, i.e. ease of flow of the melt of a chosen composition, in accordance with ISO 1133, showed that the addition of 1 or 2% sodium alkyl sulfonate to a biodegradable PLA composition had no or only a minor effect, whereas the addition of a plasticizer such as glycerol monostearate increased the melt flow index by ca. 50% causing a decrease of its processability properties (see Examples E3, E4, CE4, CE5)

The biodegradable polyester compositions and in particular the biodegradable PLA compositions of the invention are further characterized by low migration and good printability.

Another advantage of the biodegradable polyester compositions and in particular the biodegradable PLA compositions of the invention is the low additive amount needed to greatly improve their impact strength. Typically an amount of 1 % (or less) of an alkyl sulfonate may already be sufficient to cause a tenfold increase in impact strength (see Example E1, Table 1). Thus the compositions of the present invention are not just cost efficient but should also clearly fulfil the stringent requirements for obtaining a compostability or biodegradability certification and thus are highly suitable for a variety of applications.

In a further embodiment the biodegradable polyester compositions of the present invention may additionally include one or more additives such as additional polymers, dyestuffs, pigments, optical brighteners, fillers, antimicrobial additives, antistatic additives, antioxidants, flame-retardants, foaming agents, infrared absorbers, light diffusers, matting agents, melt viscosity enhancers, branching agents, nucleating agents, plasticizers, mould release additives, slip agents, lubricants, antiblock, processing aids, UV-stabilizers, and mixtures thereof, in a manner so as not to affect the impact strength improvement claimed in the present invention.

Thus, in a particular embodiment, the present invention provides a biodegradable polyester comprising a biodegradable polyester resin, a metal alkyl sulfonate and one or more additives.

Any additional polymer may be of any suitable type and generally includes, but is not limited to, homopolymers, copolymers, interpolymers, such as for example block, graft, random and alternating copolymers or interpolymers. The term "polymer" includes all possible geometrical configurations of the material, including isotactic, syndiotactic and random symmetries. Suitable types of polymers include, for example, polyolefins, such as homopolymers, copolymers, interpolymers and blends thereof of ethylene and linear or branched .alpha.-mono-olefins having at least three, preferably three to ten carbon atoms. Examples of homopolymers which may be used in the present invention are polyethylene, polypropylene and poly(1-butene). Representative examples of suitable copolymers are ethylene/propylene, ethylene/butene, ethylene/pentene, ethylene/hexene, ethylene/heptene and ethylene/octene copolymers. Suitable categories of polyethylenes include, but are not limited to, high presssure low density polyethylene (LDPE), linear low density polyethylene (LLDPE) and high density polyethylene (HDPE). Examples of other homopolymers, copolymers and interpolymers which can be used are polyesters, including polyethylene terephtalate and polybutene terephtalate, nylon, polystyrene, vinyl polymers, such as polyvinyl chloride, polyvinyl acetate, ethylene vinyl-acetate copolymers and ethylene-vinyl alcohol copolymers, ethylene methylacrylic acid copolymers (ionomers), ethylene/styrene interpolymers, polyalkylene oxide polymers, and polycarbonate. Representative examples of blends are blends of homopolymers, such as polyethylene or polypropylene, and copolymers, such as ethylene/butene or ethylene/octene and blends of copolymers.

In a further embodiment, the present invention provides a biodegradable polyester comprising a biodegradable polyester resin, a metal alkyl sulfonate and one or more additives selected from an antiblock or a slip agent in a manner so as not to affect the impact strength improvement and the transparency of the composition. Slip agents and antiblock additives are known to prevent articles from sticking to each other, which may be encountered e.g. in case of stacked trays, sheets or containers or rolled films. Slip agents and antiblocking additives are both essentially active at the surface of the plastic articles but act according to a different mode. Slip agents are usually fatty products that will reduce the coefficient of friction of the plastic articles through migration at the surface, thus facilitating slippage through a lubricating effect. Anti-blocking additives are usually solid inorganic or organic particles that will create roughness at the surface of the plastic article, thus reducing the surface of contact between surfaces of two articles in contact, reducing by the same way the adherence between them. Specific examples of slip agents include carboxylic acids, such as stearic acid; metals salts of carboxylic acid, such as calcium stearate, magnesium stearate or sodium oleate; ester wax such as cetyl palmitate, butyl stearate, esters of pentaerythritol, sorbitan monooleate or ester of montan wax; fatty acid amide wax, such as erucamide, ethylene bis-oleamide, ethylene bis-stearamide, oleyl palmitamide, oleyl stearamide, stearyl stearamide, tallow amide or stearyl erucamide; polymeric wax such as polydimethylsiloxane, paraffin wax, polypropylene wax, oxidized polyethylene wax or ethylene-propylene copolymer wax. Specific examples of inorganic antiblocking agents include natural calcium carbonate, precipitated calcium carbonate, dolomite, limestone, zeolites, magnesium carbonate, calcium sulphate, barium sulphate, glass beads, ceramic beads, precipitated amorphous silica, fumed silica, silica fumes, diatomaceous earth, quartz, novaculite, feldspar, nepheline syenite, aluminium trihydroxyde, magnesium dihydroxyde, talc, kaolin, clay, graphite, carbon fibres, carbon nanotubes, wollastonite, mica and cristobalite.

Specific organic antiblocking agents include crosslinked silicone particles, crosslinked acrylic particles and Polytetrafluoroethylene particles.

Preferably, the slip and antiblock additives are present each in an amount of 0.1 and 1 % by weight based on the total composition weight, more preferably each additive is present in an amount of 0.1 to 0.3 % by weight based on the total composition weight.

In a further particular embodiment, the present invention provides a biodegradable polyester composition comprising a biodegradable polyester resin, a metal alkyl sulfonate and a UV-stabilizer. UV stabilizers may be added to protect either the polymer itself from UV radiation and/or the content enclosed in the article made thereof, for example to prevent UV-sensitive beverages from degradation.

Specific UV-stabilizer include 2-hydroxybenzophenones, 2-hydroxyphenylbenzotriazoles, sterically hindered amines, cyanoacrylate of pentaerythritol, organic nickel compounds, salicylates, cinnamate derivatives, resorcinol monobenzoates, oxanilides, and p-hydroxy-benzoates. If the biodegradable polyester composition further comprising a UV stabilizer is used in films or other articles acting as a UV barrier, the UV stabilizer is preferably present in an amount of 0.1 to 1% by weight based on the total composition weight.

If the presence of the UV stabilizer in the biodegradable polyester composition is to protect the polymer itself from UV radiation to increase its durability, the UV stabilizer is preferably present in an amount of 1 to 5 % by weight based on the total composition weight.

As indicated hereinabove, the process for incorporating a metal alkyl sulfonate into a biodegradable polyester matrix is very versatile. A metal alkyl sulfonate of choice may be added directly during the manufacture of end products such as films, sheets or moulded articles. Alternatively, a metal alkyl sulfonate of choice may be previously dispersed in the biodegradable polyester and is added during end-product manufacture via a masterbatch or a compound. As a further alternative a metal alkyl sulfonate of choice may also be added directly to the polymer matrix during or right after the polymerisation step. In order to ensure optimal dispersion, which is crucial for the impact and transparency performance of the end-application, the metal alkyl sulfonate of the invention is preferably added during the manufacture of end articles via a masterbatch.

As used herein, the term "masterbatch" denotes granules of polymeric carrier containing a high concentration of additive intimately and homogeneously dispersed in the polymeric matrix. Masterbatches are added during the manufacture of end-articles usually in a loading of a few percent and are based on the same or on a different polymeric carrier, preferably on the same polymeric carrier than the intended application.

The incorporation of a metal alkyl sulfonate additive into the masterbatch is preferably performed with a melt mixing equipment. Specific melt mixing equipments suitable for the manufacture of the said masterbatch include single screw extruder, co-rotating or counter-rotating twin-screw extruder, multiple screw extruder or co-kneader. Preferably the melt-mixing equipment used is a twin-screw co-rotating extruder equipped with screws having a diameter of at least 27 mm and a Length to Diameter (L/D) ratios of at least 40. The screws are preferably equipped with kneading and mixing elements in order to ensure an optimal and homogeneous dispersion of the metal alkyl sulfonate in the polymer matrix.

To ensure constant and homogeneous quality of the masterbatch, the ingredients are preferably dosed in a twin screw extruder with gravimetric dosing units. Preferentially the polymer carrier is added in the extruder via the main hopper and the metal alkyl sulfonate additive is incorporated into the polymer melt via a side feeder.

The molten homogeneous material obtained is then preferably strand-pelletized. Strand pelletizing occurs preferentially after cooling down of the strands, for example passing through a water bath, with a rotating knife or with underwater granulation equipment. Other methods of production known in the art may be applied as well.

Processing conditions to be applied during masterbatch extrusion are dependant of the polymer carrier used. In the preferred case where the polymeric carrier is PLA, then the processing temperature are in the range of 180 to 240°C and even more preferred in the rang of 200 to 220°C.

If further additives are used in the compositions of the invention, these are typically added directly during production of end-articles or semi-finished products via a separated masterbatch or via the same masterbatch containing the alkyl sulfonate of the present invention.

Thus a further aspect of the present invention provides a polyester masterbatch comprising a biodegradable polyester resin and an alkyl sulfonate with the proviso that glycerin fatty acid esters are excluded from the composition.

Similarly to the biodegradable polyester composition of the present invention, the polyester masterbatch composition of the invention may be based on one or more biodegradable polyester from biodegradable aliphatic polyesters, aliphatic-aromatic polyesters, or polyhydroxyalkanoates, and the like, including blends and copolymers thereof

The masterbatch of the present invention may contain additionally further biodegradable polymer other than a polyester.

All definitions used hereinbefore to define the nature of the components also apply to the nature of the components of the polyester masterbatch composition.

In a preferred embodiment, the masterbatch of the present invention comprises polylactic acid, including blends of polylactic acid with one or more other biodegradable polymers and copolymers of polylactic acid.

Preferably, the total amount of biodegradable polyester resin (i.e. polymer, copolymer, or polymer blend) present in the composition is between 50% to 95%, preferably 70% to 80%, more preferably between 75% and 80% by weight based on the total biodegradable polyester composition.

In a preferred embodiment the metal alkyl sulfonate is present in the polyester masterbatch composition in an amount between 5% and 50%, more preferably between 10% and 30%, and even more preferably between 20% and 25% by weight related to the total composition weight.

In a preferred embodiment the invention provides a polyester masterbatch composition comprising polylactic acid and a sodium alkyl C(6-24) sulfonate where the ratio polylactic acid to alkyl sulfonate is comprised between 1/1 and 1/20 by weight related to the total composition weight.

The polyester masterbatch may additionally further comprise one or more additives selected from additional polymers, dyestuffs, pigments, optical brighteners, fillers, antimicrobial additives, antistatic additives, antioxidants, flame-retardants, foaming agents, infrared absorbers, light diffusers, matting agents, melt viscosity enhancers, branching agents, nucleating agents, plasticizers, mould release additives, slip agents, lubricants, antiblock, processing aids, UV-stabilizers, or mixtures thereof,

Preferably, the additives are present in an amount of 0.1% and 70% by weight based on the total composition weight.

Any additional polymer may be of any suitable type and generally includes, but is not limited to, homopolymers, copolymers, interpolymers, such as for example block, graft, random and alternating copolymers or interpolymers. The term "polymer" includes all possible geometrical configurations of the material, including isotactic, syndiotactic and random symmetries. Suitable types of polymers include, for example, polyoleflns, such as homopolymers, copolymers, interpolymers and blends thereof of ethylene and linear or branched .alpha.-mono-olefins having at least three, preferably three to ten carbon atoms. Examples of homopolymers which may be used in the present invention are polyethylene, polypropylene and poly(1-butene). Representative examples of suitable copolymers are ethylene/propylene, ethylene/butene, ethylene/pentene, ethylene/hexene, ethylene/heptene and ethylene/octene copolymers. Suitable categories of polyethylenes include, but are not limited to, high presssure low density polyethylene (LDPE), linear low density polyethylene (LLDPE) and high density polyethylene (HDPE). Examples of other homopolymers, copolymers and interpolymers which can be used are polyesters, including polyethylene terephtalate and polybutene terephtalate, nylon, polystyrene, vinyl polymers, such as polyvinyl chloride, polyvinyl acetate, ethylene vinyl-acetate copolymers and ethylene-vinyl alcohol copolymers, ethylene methylacrylic acid copolymers (ionomers), ethylene/styrene interpolymers, polyalkylene oxide polymers, and polycarbonate. Representative examples of blends are blends of homopolymers, such as polyethylene or polypropylene, and copolymers, such as ethylene/butene or ethylene/octene and blends of copolymers.

Preferably the masterbatch of the present invention comprises a biodegradable polyester resin, a metal alkyl sulfonate and one or more slip agents and/or antiblocking additives.

Preferably, the slip agent and/or antiblocking additive are each present in an amount of 1% and 5% by weight based on the total masterbatch composition weight

In another preferred embodiment, the masterbatch of the present invention comprises a biodegradable polyester resin, a metal alkyl sulfonate and one or more UV stabilizers.

In a further aspect, the present invention provides a method for producing a biodegradable polyester composition comprising the step of mixing the masterbatch of the present invention with a biodegradable polyester resin.

Thus the invention is also directed to the use of a polyester masterbatch composition of the invention for the production of a biodegradable polyester composition of the invention.

The granules mixture composed of the masterbatch and the biodegradable polyester resin is preferably used as such for the production of end use articles but may also be processed on an extruder to form homogenous granules that will be used in the production of end articles.

Depending on the amorphous or semi-crystalline nature of the biodegradable polyester resin, the granules may be crystallized. Preferably, the granules will be dried before their use. In the preferable case where the biodegradable polyester is PLA amorphous granules are typically dried at 30-50°C for several hours, while crystalline granules are typically dried at 90°C for several hours.

In another aspect, the present invention relates to articles made from the compositions according to the present invention. Specific examples of articles made from the composition include, but are not limited to, extruded films, sheets, profiles, coatings, thermoformed articles and moulded articles. Specific examples of films include thin films, monoaxially or biaxially oriented films, monolayer or multilayer coextruded films, blown films and laminates. Specific examples of sheets include monolayer or multilayer sheets, twin-wall sheets or foamed sheets. Specific examples of moulded articles include bottles or containers obtained by extrusion blow moulding, injection blow moulding or injection stretch blow moulding, or any other moulded articles obtained by injection moulding.

In a further particular embodiment, the present invention relates to multilayer coextruded films or sheets wherein one or more layers have a composition according to the present invention. More preferably the present invention relates to coextruded multilayer films or sheets, wherein the two external layers comprise a biodegradable polyester resin and a metal alkyl sulfonate according to the present invention and wherein the inner layers comprise a biodegradable polyester resin.

In a further aspect, the present invention is directed to the use of an alkyl sulfonate as impact modifier in biodegradable polyester compositions and in the production of articles composed of the biodegradable polyester composition claimed in the invention.

All of the compositions claimed herein can be made and executed without undue experimentation in light of the present disclosure. It will be apparent to those of skill in the art that variations may be applied to the present invention without departing from the scope of the invention. The Examples provided herein are intended to be illustrative and are not exhaustive; and thus should not be viewed as limiting the invention in any way.

### Examples

Materials and Methods. The impact strength data exhibited in the following refers to the total penetration energy measured according to DIN EN ISO 6603-2 (2 kg falling weight; 1 mm fall height) performed at room temperature on 0.5 mm thick films produced on a cast film extruder (output 300 kg/ hours; processing temperatures 190-210°C).

Transmission and haze were measured according to ASTM D1003 on the same 0.5 mm samples.

The melt flow index was measured according to ISO 1133 with a temperature of 210°C and a weight of 3.18 kg.

Atmer^{®} 190 (Croda) was used as the alkyl sulfonate.

### Comparative Example CE1:

As a comparative example 100% PLA (NatureWorks™ PLA 2002D ) was used. Dried PLA was used to produce 0.5 mm film on a single screw extruder at temperatures between 190 and 210°C.

### Comparative Examples CE2

98% PLA + 2% aliphatic-aromatic polyester processed and granulated on a twin screw extruder at temperatures comprised between 190 and 210°C. The granules obtained were dried and processed in 0.5 mm thick on a single screw film extruder at temperatures between 190 and 210°C.

### Comparative Example CE3

95% PLA + 5% poly(butylene adipate-co-terephtalate) processed and granulated on a twin screw extruder at temperatures comprised between 190 and 210°C. The granules obtained were dried and processed in 0.5 mm thick on a single screw film extruder at temperatures between 190 and 210°C.

### Comparative Example CE4

100% PLA processed and granulated on a twin screw extruder at temperatures comprised between 190 and 210°C.

### Comparative Example CE5

99% PLA + 1% sodium alkyl (C₁₀₋₁₈) sulfonate + 1% glycerine monostearate processed and granulated on a twin screw extruder at temperatures comprised between 190 and 210°C. The sodium alkyl (C₁₀₋₁₈) sulfonate was added via a pre-dried masterbatch containing 25% sodium alkyl (C₁₀₋₁₈) sulfonate and 75% PLA. Glycerine Monostearate was added via a pre-dried masterbatch containing 10% Glycerine monostearate and 90% PLA.

### Comparative Example CE6

100% PLA processed into an injection moulding sample with a thickness of 2 mm on an injection moulding press at temperatures comprised between 190 and 210°C with a mould temperature of 20°C.

### Comparative Example CE7

100% PLA processed into a blown film with a thickness of 100 µm on a blown film extruder at temperatures comprised between 190 and 210°C.

### Example E1 : Preparation of 99% PLA + 1 % sodium (C₁₀₋₁₈)alkyl sulfonate.

Films with a thickness of 0.5 mm were obtained on a single screw extruder at temperatures between 190 and 210°C, using a pre-dried mixture of 96% PLA and 4% of a masterbatch containing 25% sodium alkyl (C₁₀₋₁₈) sulfonate and 75% PLA. The masterbatch was previously prepared on a twin screw extruder using temperatures between 190 and 210°C.

### Example E2: Preparation of 98% PLA + 2 % sodium (C₁₀₋₁₈)alkyl sulfonate.

The composition and film made thereof was prepared in analogy to Example E1.

### Example E3: Preparation of 99% PLA + 1 % sodium (C₁₀₋₁₈)alkyl sulfonate

99% PLA + 1% sodium alkyl (C₁₀₋₁₈) sulfonate processed and granulated on a twin screw extruder at temperatures comprised between 190 and 210°C. The sodium alkyl (C₁₀₋₁₈) sulfonate was added via a pre-dried masterbatch containing 25% sodium alkyl (C₁₀₋₁₈) sulfonate and 75% PLA

### Example E4: Preparation of 98% PLA + 2 % sodium (C₁₀₋₁₈)alkl sulfonate

The composition was prepared in analogy to Example E3.

### Example E5: Preparation of 99% PLA + 1 % sodium (C₁₀₋₁₈)alkyl sulfonate.

Injection moulding parts with a thickness of 2 mm were obtained on an injection moulding press at temperatures between 190 and 210°C and with a mould temperature of 20°C, using a pre-dried mixture of 96% PLA and 4% of a masterbatch containing 25% sodium alkyl (C₁₀₋₁₈) sulfonate and 75% PLA. The masterbatch was previously prepared on a twin screw extruder using temperatures between 190 and 210°C.

### Example E6: Preparation of 98% PLA + 2 % sodium (C₁₀₋₁₈)alkyl sulfonate.

The composition was prepared in analogy to Example E5.

### Example E7: Preparation of 97% PLA + 3 % sodium (C₁₀₋₁₈)alkyl sulfonate.

The composition was prepared in analogy to Example E5.

### Example E8: Preparation of 99% PLA + 1 % sodium (C₁₀₋₁₈)alkyl sulfonate.

Blown films with a thickness of 100 µm were obtained on a blown film extruder at temperatures between 190 and 210°C, using a pre-dried mixture of 96% PLA and 4% of a masterbatch containing 25% sodium alkyl (C₁₀₋₁₈) sulfonate and 75% PLA. The masterbatch was previously prepared on a twin screw extruder using temperatures between 190 and 210°C.

### Example E9: Preparation of 98% PLA + 1 % sodium (C₁₀₋₁₈)alkyl sulfonate.

The composition was prepared in analogy to Example E8.

**Table 1:**

| Example | Composition | Impact strength Total Energy (J) | Transmission % | Haze % |
|---|---|---|---|---|
| CE1 | 100% PLA | 0.07 | 94 | 5 |
| E1 | 99% PLA + 1% sodium alkyl (C₁₀₋₁₈) sulfonate | 0.78 | 94 | 8 |
| E2 | 98% PLA + 2% sodium alkyl (C₁₀₋₁₈) sulfonate | 1.21 | 93 | 13 |

**Table 2**

| Example | Composition | Haze % |
|---|---|---|
| CE2 | 98% PLA + 2% aliphatic-aromatic polyester | 100 |
| CE3 | 95% PLA + 5% poly(butylene adipate-co-terephtalate) | 100 |

**Table 3**

| Example | Composition | Melt flow index (g/10 min) |
|---|---|---|
| CE4 | 100% PLA | 10.4 |
| E3 | 99% PLA + 1% sodium alkyl (C10-18) sulfonate | 11.4 |
| E4 | 98% PLA + 2% sodium alkyl (C10-18) sulfonate | 12.7 |
| CE5 | 98% PLA + 1% glycerol monostearate + 1% sodium alkyl (C10-18) sulfonate | 17.9 |

**Table 4**

| Example | Composition | Transmission % | Haze % |
|---|---|---|---|
| CE6 | 100% PLA | 90.3 | 9.6 |
| E5 | 99% PLA + 1% sodium alkyl (C₁₀₋₁₈) sulfonate | 89.3 | 12.1 |
| E6 | 98% PLA + 2% sodium alkyl (C₁₀₋₁₈) sulfonate | 87.5 | 18.4 |
| E7 | 97% PLA + 3% sodium alkyl (C10-18) sulfonate | 86.1 | 27.3 |

**Table 5**

| Example | Composition | Transmission % | Haze % |
|---|---|---|---|
| CE7 | 100% PLA | 94 | 1.1 |
| E8 | 99% PLA + 1% sodium alkyl (C₁₀₋₁₈) sulfonate | 93.5 | 2.1 |
| E9 | 98% PLA + 2% sodium alkyl (C₁₀₋₁₈) sulfonate | 93.4 | 4.6 |

## Claims

1. A biodegradable polyester composition with excellent impact strength and transparency comprising a biodegradable polyester resin and a metal alkyl sulfonate, wherein the amount of metal alkyl sulfonate is between 0.1 and 5 % by weight based on the total composition weight, with the proviso that glycerin fatty acid esters are excluded from the composition.

2. The biodegradable polyester composition according to claim 1 wherein the biodegradable polyester composition shows a transparency > 75 % and/or a haze < 25 %.

3. The biodegradable polyester composition according to claims 1 or 2, wherein the biodegradable polyester resin is (i) a biodegradable polyester selected from biodegradable aliphatic polyesters, aliphatic-aromatic polyesters, or polyhydroxyalkanoates, (ii) a blend of at least two biodegradable polyester selected from biodegradable aliphatic polyesters, aliphatic-aromatic polyesters, or polyhydroxyalkanoates, or (iii) a blend of a biodegradable polyester selected from biodegradable aliphatic polyesters, aliphatic-aromatic polyesters or polyhydroxyalkanoate with a further biodegradable polymer other than a polyester, preferably polylactic acid, wherein preferably the amount of biodegradable polyester resin is between 95 and 99.9 % by weight based on the total composition weight.

4. The biodegradable polyester composition according to any preceding claim wherein the metal alkyl sulfonate is a sodium C(6-24)alkyl sulfonate or a mixture thereof.

5. The biodegradable polyester composition according to any preceding claim essentially consisting of a biodegradable polyester resin and an alkyl sulfonate.

6. The biodegradable polyester composition according to any preceding claim further comprising one or more additives, preferably selected from additional polymers, dyestuffs, pigments, optical brighteners, fillers, antimicrobial additives, antistatic additives, antioxidants, flame-retardants, foaming agents, infrared absorbers, light diffusers, matting agents, melt viscosity enhancers, branching agents, nucleating agents plasticizers, mould release additives, slip agents, lubricants, antiblock, processing aids, UV-stabilizers, or mixtures thereof, more preferably selected from an antiblock, a slip agent and/or a UV-stabilizer.

7. The biodegradable polyester composition according to claim 6 wherein the amount of one or more antiblock and/or slip agent is each between 0.1 and 1 % and the amount of one or more UV stabilizer is between 0.1 and 5 % by weight based on the total composition weight

8. A polyester masterbatch composition comprising a biodegradable polyester resin and a metal alkyl sulfonate, wherein the amount of metal alkyl sulfonate is between 5 and 50 % by weight based on the total composition weight, with the proviso that glycerin fatty acid esters are excluded from the composition.

9. The polyester masterbatch composition according to claim 8 wherein the biodegradable polyester resin is (i) a biodegradable polyester selected from biodegradable aliphatic polyesters, aliphatic-aromatic polyesters, or polyhydroxyalkanoates, (ii) a blend of at least two biodegradable polyester selected from biodegradable aliphatic polyesters, aliphatic-aromatic polyesters, or polyhydroxyalkanoates, or (iii) a blend of a biodegradable polyester selected from biodegradable aliphatic polyesters, aliphatic-aromatic polyesters or polyhydroxyalkanoate with a further biodegradable polymer other than a polyester, preferably polylactic acid, wherein preferably the amount of biodegradable polyester resin is between 50 and 95 % by weight based on the total composition weight.

10. The polyester masterbatch composition according to claims 8 or 9 wherein the alkyl sulfonate is a sodium alkyl C(6-24) sulfonate or a mixture thereof, wherein preferably the ratio of sodium alkyl C(6-24) sulfonate to the biodegradable polyester resin is comprised between 1/1 and 1/20 by weight related to the total composition weight.

11. The polyester masterbatch composition according to any of claims 8 to 10 further comprising one or more additives, preferably selected from additional polymers, dyestuffs, pigments, optical brighteners, fillers, antimicrobial additives, antistatic additives, antioxidants, flame-retardants, foaming agents, infrared absorbers, light diffusers, matting agents, melt viscosity enhancers, branching agents, nucleating agents plasticizers, mould release additives, slip agents, lubricants, antiblock, processing aids, UV-stabilizers, or mixtures thereof, more preferably selected from an antiblock, a slip agent and/or a UV-stabilizer.

12. The polyester masterbatch composition according to claim 12 wherein the amount of one or more additives is between 0.1 and 70 % by weight based on the total composition weight.

13. Use of a polyester masterbatch composition according to claims 8 to 12 for the production of a biodegradable polyester composition according to claims 1 to 7.

14. A method of producing the biodegradable polyester composition according to claims 1 to 7 comprising the step of mixing a biodegradable polyester resin with a polyester masterbatch composition according to claims 8 to 12.

15. Use of a biodegradable polyester composition according to claims 1 to 7 in the production of a film, sheet, multiplayer coextruded film or sheet, profile, coating, thermoformed article and moulded article.

16. A film, sheet, profile, coating, thermoformed article and moulded article composed of a biodegradable polyester composition according to claims 1 to 7 or a multilayer coextruded film or sheet wherein one or more layers are composed of a biodegradable polyester composition according to claims 1 to 7.

17. A method of producing a film, sheet, profile or moulded article or a multilayer coextruded film or sheet according to claim 16 comprising the step of mixing a biodegradable polyester resin with a masterbatch according to claims 8 to 12.

18. Use of an alkyl sulfonate as an impact modifier in biodegradable polyester compositions according to claims 1 to 7, wherein preferably the alkyl sulfonate is a sodium C(6-24) sulfonate or a mixture thereof.
